# EUROPEAN PATENT SPECIFICATION

(11) **EP 2 992 060 B1**
(45) Date of publication and mention of the grant of the patent: **01.07.2020**
(21) Application number: 14728730.4
(22) Date of filing: 29.04.2014
(51) Int. Cl.: C09J 7/24, C08K 3/26, C08K 5/098

(54) **HIGH TEMPERATURE RESISTANT INSULATING ADHESIVE TAPE SUBSTRATE MATERIAL**
MATERIAL FÜR ISOLIERENDES UND HOCHTEMPERATUR-BESTÄNDIGES KLEBEBANDSUBSTRAT
MATERIAU DE SUBSTRAT DE RUBAN ADHESIF ISOLANT ET RESISTANT AUX HAUTES TEMPERATURES

(30) Priority: 03.05.2013 BR 102013011036
(43) Date of publication of application: 09.03.2016
(73) Proprietor: 3M Innovative Properties Company, St. Paul, MN 55133-3427 (US)
(72) Inventor: ARANTES, Vanessa Correa, CEP 13001-970 Sumaré - São Paulo (BR); KANEKO, Manuela Lima Queiroz de Andrade, CEP 13001-970 Sumaré - São Paulo (BR)
(74) Representative: Mathys & Squire
(86) International application number: PCT/US2014/035791
(87) International publication number: WO 2014/179264

(56) References cited:
- EP-A1- 1 039 481
- US-A1- 2010 292 379
- DATABASE WPI Week 201312 Thomson Scientific, London, GB; AN 2013-B93080 XP002728271, & TW 201 219 479 A (HONG TAI ELECTRIC IND CO LTD) 16 May 2012 (2012-05-16)
- DATABASE WPI Week 200205 Thomson Scientific, London, GB; AN 2002-037814 XP002728272, & JP 2001 288319 A (SUMITOMO DENSO KK) 16 October 2001 (2001-10-16)
- DATABASE WPI Week 200137 Thomson Scientific, London, GB; AN 2001-347352 XP002728273, & JP 2000 345121 A (YAZAKI CORP) 12 December 2000 (2000-12-12) cited in the application
- BOWEN P: "Particle Size Distribution Measurement from Millimeters to Nanometers and from Rods to Platelets", JOURNAL OF DISPERSION SCIENCE AND TECHNOL, TAYLOR AND FRANCIS GROUP, NEW YORK, NY, US, vol. 23, no. 5, 1 January 2002 (2002-01-01), pages 631-662, XP009102859, ISSN: 0193-2691, DOI: 10.1081/DIS-120015368

## Description

### FIELD OF THE INVENTION

The present invention relates to an insulating substrate material for adhesive tapes that is resistant to temperatures of up to about 105 °C for at least 20,000 hours and is intended, more specifically, for the preparation of insulating tapes that can be used in various types of applications - including insulation of electrical wires. The invention further relates to the substrate composition.

### BACKGROUND

As is known in the art, PVC (polyvinylchloride) insulating adhesive tapes - the so called insulating tapes - are broadly used in several industrial segments and several applications, such as for example, construction and in the electrical field due its competitive cost. However, it should be mentioned that the most widely known use of this type of insulating tape is in applications that require electrical wires and cables to be electrically insulated, especially for protecting splices in electrical installations - points where the material should also present thermal resistance characteristics due to the heat energy released by the Joule effect from electric current.

Thermal resistance of the material is also necessary due to the possible use in environments subject to high temperatures In view of that, presently known and used PVC insulating tapes have maximum thermal resistance of about 90 °C, which corresponds to the maximum temperature to which conventional electric cables can be subjected. As an example, document CN102153825 can be cited, which discloses a PVC electric cable insulating material that is resistant to low and high temperatures ranging from -30 to 90 °C.

A newer generation of electric cables has emerged in the market and these cables can reliably support temperatures of up to 105°C, but no affordable elements for insulating and protecting splices are known to be capable of accompanying such an evolution, which can cause serious drawbacks to the safety of installations.

Documents JP2011046964 and JP2008143976, for example, describe adhesive tape substrates having high thermal resistance, but with different composition from the invention, including different polymer base.

Document CN101230171 relates to a high temperature-resistant insulating plastic material, but the composition thereof includes the plasticizer phthalate. Some phthalates are being put on REACH (the European Community Regulation on chemicals and their safe use) lists in Europe and their use is likely to be banned in some parts of the world in the future. The same plasticizer is also used in the material of document RU2429255. In document IN2010CH02599, a high temperature-resistant electrical cable that has a PVC-coated mica insulating layer is disclosed. Therefore, it refers to a electrical cable, differing it from the present invention.

Document JP2000345121 discloses another PVC adhesive material made of a polyester-based plasticizer but that does not present the same thermal resistance of the present invention and, finally, document JP2001247829 describes a non-PVC thermally resistant product, therefore, it can be stated that it has a different composition and features than the present invention.

The state of the art lacks an insulating adhesive tape substrate material having thermal resistance capability to support temperatures of about 105°C, in order to be safely used with the newer generation of electric cables that has been currently developed and marketed.

### OBJECTS OF EMBODIMENTS OF THE INVENTION

Therefore, one object of at least one embodiment of the present invention is to provide a high temperature-resistant adhesive-coated substrate material, which can support operating temperatures of about 105°C for at least 20,000 hours as compared with the 90°C that limit the maximum operating temperature of similar materials known in the current state of the art.

Another object of at least one embodiment of the present invention is to provide an insulating substrate material comprising polyvinyl chloride (PVC) resin, which supports a temperature of 105°C and further has an electrical insulating characteristic to be safely used in general electric installations.

Another object of at least one embodiment of the present invention is to disclose a high temperature-resistant insulating substrate material which does not comprise in its composition materials phthalate plasticizers.

Accordingly, one of the objects of at least one embodiment of the present invention is to provide a high temperature resistant insulating adhesive-coated substrate material that is relatively simple to be produced and has affordable manufacturing/commercialization costs, thus stimulating the use thereof and consequently being safer to installations in general.

### SUMMARY OF THE INVENTION

The aforementioned objects are achieved by at least one embodiment of the present invention by means of a substrate composition of a high temperature resistant insulating material to be used, more specifically, in insulating adhesive tapes.

According to the invention, said composition comprises 40-50 wt.-% polyvinyl chloride (PVC), 13-23 wt.-% calcium carbonate (CaCO₃) and 5-15-wt.-% calcium and zinc stabilizer (Ca/Zn) for the preparation of a substrate having thermal resistance of 105°C for at least 20,000 hours of exposure.

In another embodiment, said composition comprises the following description: 40% to 50% PVC resin; 5% to 15% calcium/zinc (Ca/Zn) stabilizer; 0.2% to 5% monomeric plasticizer; polymeric plasticizer; 13% to 23% calcium carbonate (CaCO₃), flame retardant; antioxidants; pigment.

In yet another embodiment, the composition comprises: 40% to 50% PVC resin; 5% to 15% calcium/zinc (Ca/Zn) stabilizer; 1,5 % to 4% monomeric plasticizer; polymeric plasticizer; co-stabilizer; 13% to 23% calcium carbonate (CaCO₃), flame retardant; antioxidants; pigment .

Preferably, the insulating substrate material substrate of the present invention has a thickness of 0.1 to 0.2 millimeters.

Thus, the objects of embodiments of the invention are further reached by a high temperature resistant insulating adhesive tape, comprising, more specifically, a substrate, at least one primer base layer and at least one adhesive substance layer, characterized in that it comprises a substrate made according to the characteristics described above.

### BRIEF DESCRIPTION OF DRAWINGS

The invention will now be described by reference to the appended figures, in which:
FIG. 1 illustrates the results of a HCl volatilization test carried out on compositions of the present invention and a comparative example;
FIG. 2 illustrates the results of a test for mass loss of the samples subjected to the test described in FIG. 1.
FIG. 3 illustrates the results of Thermogravimetric Analysis (TGA) of compositions of the present invention and a comparative example.
FIG. 4 shows Scanning Electron Microscop images of compositions of the present invention.

### DETAILED DESCRIPTION OF THE INVENTION

The subject matter of the present invention will now be described in detail below by way of example and not limitation, since both the material and the method of production *per se* disclosed herein may comprise different details and structural, procedure and dimensional aspects, without departing from the intended scope of protection.

At least one embodiment of the present invention relates to an insulating and thermally resistant adhesive tape substrate material intended to be used in several areas, including insulation of electric cables, wherein said substrate material comprises essentially a polyvinyl chloride resin with other components, including thermal stabilizers, flame retardant, plasticizers, synthetic rubber and optionally, black pigment. The tape further comprises a pressure sensitive adhesive and an intermediate layer of water- based primer.

The composition embodiments of the present invention do not contain the plasticizer phthalate. Furthermore, the product embodiments disclosed herein meet the guidelines of the RoHS agreement - Restriction of Hazardous Substances signed in 2002, according to which member countries would assume the commitment of assuring that, as of 2006, new electrical and electronic equipment made available on the market should have minimum amounts of the following extremely hazardous substances: mercury, cadmium, hexavalent chromium, polycromated biphenyls, polybromated diphenyl ethers and lead.

Furthermore, said substrate materials and tapes made therefrom have a thermal resistance of 105°C for at least 20,000 hours of exposure, in addition to having excellent flexibility and mechanical strength - it should be reminded that similar materials known in the current state of the art also have excellent mechanical and electrical properties, but a thermal resistance limited to 90°C due to the substrate composition.

Briefly, the present invention comprises a PVC substrate coated with a pressure-sensitive rubber adhesive, wherein the primary ingredients of the composition of the substrate are shown in Table 1:

**Table 1:**

| **Material** | | **Preferred weight range in the composition (%)** |
|---|---|---|
| PVC resin | | 40 - 50 |
| Ca/Zn stabilizer | | 5 - 15 |
| Monomeric plasticizer | | 1.5 - 4 |
| Calcium carbonate (CaCO₃) | | 13 - 23 |

In addition to the materials mentioned in Table 1, other materials can be added to produce the film and provide different features to the material such as monomeric plasticizer, e.g., trioctyl trimelitate (TOTM), diisononyl phthalate (DINP); co-stabilizers, e.g., epoxidized oil; flame retardants, e.g., antimony trioxide; synthetic rubber, e.g., nitrile rubber, phenol antioxidants e.g., 4-methyl phenol and 3,5 di-tert-butyl-4-hidroxiphenyl, and pigment, e.g., black pigment. Preferably, a first phenol antioxidant of the present invention is suitable for stabilizing nitrle rubber, e,g, 4-methyl phenol and a second phenol antioxidant is suitable for stabilizing PVC formulations, e.g., 3,5 di-tert-butyl-4-hidroxiphenyl.Exemplary, non-limiting ranges for these materials are provided in Table 2:

**Table 2**

| **Material** | **Typical weight range in the composition (%)** | **Preferred weight range in the composition (%)** |
|---|---|---|
| Polymeric plasticizer | 5 - 25 | 12 - 22 |
| Co-stabilizer | 0.5 - 5 | 1 - 3 |
| Flame retardant | 2 - 10 | 2 - 5 |
| synthetic rubber | 1 - 10 | 2 - 6 |
| Antioxidant 1 | 0.05 - 3 | 0.07 - 0.1 |
| Antioxidant 2 | 0.3 - 2 | 0.5 - 1.5 |
| Pigment | 1 - 10 | 2 - 6 |

PVC resins that are appropriate for the present invention have a K value of 70. Such resins are commercially available and a preferred one includes SP1300 or 271 PY which are commercially available from Braskem or Solvay, respectively.

The present composition may contain commercially available Ca/Zn stabilizer under the name CZ6540 from Chemson; which is composed by 34-38 % calcium in its composition.

Monomeric plasticizers are well-known in the art and are added to the composition to enhance thermal resistance property of insulating tape and to improve its flexibility and processing properties. Monomeric plasticizer appropriate for the present invention includes, but is not limited to, trioctyl trimelitate. Examples of commercially available plasticizers include those one comprising trioctyl trimelitate from Scandiflex and Elekeiroz.

CaCO₃ that is appropriate for the present invention preferably has a particle size between about 1 and 20 microns, preferably between about 1 and 10 microns, and most preferably between about 1 and 3 microns. Suitable CaCO₃ is commercially available, e.g., from Micronita (www.micron-ita.com.br) and Provale (www.provale.ind.br). Thermal resistance characteristics of the material of the present invention are obtained by using a low density, small particle, micronized inorganic calcium carbonate (CaCO₃) load (in an amount of 13 - 23% of the total composition).

In this regard, it is important to note that, in general, conventional methods to improve thermal stability of plastic films include modifications to the nature and/or molecular weight of the plasticizers, and also a selection of different types and amounts of stabilizers.

The composition of the present invention uses a thermal stabilizer containing a greater amount of calcium compared to similar products, which support a maximum temperature of 90°C and the material further has a greater amount of stabilizer. However, tests carried out lead to the conclusion that this modification alone was not sufficient to obtain an intended thermal resistance of 105°C. In view of that, the composition thus prepared had a greater amount of micronized calcium carbonate load in the vinyl substrate and the results obtained have shown the effectiveness of using said material in the instant formulation. "Micronized" refers to particles that have been processed to sizes of about 1 to 100 micrometers.

Additionally, it is important to note the using a calcium carbonate load has also significantly improved elongation property of the material without compromising tensile strength.

The skilled person knows that elongation can be improved by adding to the composition larger amounts of plasticizer, however, it was unexpected that the micronized inorganic load increased both thermal resistance and elongation of the product.

A suitable method for the manufacturing the substrate of the high temperature resistant insulating adhesive material of the present invention includes the following steps:
1. adding PVC resin, calcium/zinc (Ca/Zn) stabilizer, monomeric plasticizer, polymeric plasticizer, co-stabilizer, calcium carbonate (CaCO₃), and antimony trioxide to a mixing equipment and processing them at a temperature of from 85 to 105°C;
2. adding the following components to the premix obtained in the previous step: nitrile rubber, antioxidants and pigment black and melting the material at a temperature comprised between 175 and 195°C;
3. pouring the mixture in an homogenization equipment operating at a temperature between 170 and 190°C;
4. conveying the mixture to an extrusion equipment operating at a temperature between 170 and 190°C, wherein said extrusion equipment feeds at least one calender;
5. processing the material in the calender until the desired thickness of the substrate is achieved, wherein the preferred thickness is from 0.1 to 0.2 millimeters;

Following this process, water-based primer is applied to the substrate and then the pressure sensitive adhesive is applied on the primer. It should be noted that other types of adhesives and primers can be used, such as for example, acrylates, provided that they do not affect resistance of the substrate to high temperatures.

The final step comprises cutting the high temperature resistant insulating adhesive material into the desired shape for use, which is usually a roll.

### EXAMPLES

The following examples and comparative example are offered to aid in the understanding of the present invention and are not to be construed as limiting the scope thereof. Unless otherwise indicated, all parts and percentages are by weight. The following test methods and protocols were employed in the evaluation of the illustrative and comparative examples that follow.

**Materials List**

| **Product Name** | **Description** | **Source** |
|---|---|---|
| SP 1300 | PVC resin | Braskem, Brazil |
| CZ6540 | Ca/Zn stabilizer | Chemson www.chemson.com |
| TOTM | monomeric plasticizer (trioctyl trimelitate) | Elekeiroz, Brazil |
| DRAPEX 6.8 | Co-stabilizer (epoxidized soybean oil) | Inbra Industries Quimicas Ltda., Brasil |
| PROFINE 2 | Calcium carbonate | Profine, Brazil |
| V ALENTIOXY | flame retardant (Antimony trioxide) | Oxy www.oxy.com |
| WINGSTAY L FLAKE | 4-methyl phenol antioxidant | Eliokem, France |
| IRGANOX 1010 | 2[3,5 di-tert-butyl-4-hidroxiphenyl antioxidant | Ciba Specialty Chemicals (now part of BASF), Germany |
| MASTERBACH PRETO | pigment (black) | Vimaplas Industria e Comercio Ltda., Brasil |
| VIERNOL XH8 | Linear polyester | Scandiflex S.A., Brazil |
| NITRIFLEX NP 2021 | Nitrile rubber | NITRIFLEX S.A., Brazil |

Four samples were prepared: Example 1, 2 and 3 and Comparative Example 1. Furthermore it was prepared two formulations replacing CaCO3 filler to Magnesium oxide (composed by at least 88% of MgO, supplied by Buschle & Lepper S.A.) for example 2 and Aluminium silicate (composed by Al₂O₃,2SiO₂, commercially available under the name SAC 100ZA, supplied by Imerys) for example 3. The compositions of the samples are shown in Table 3 and descriptions of how the samples were made are provided below.

**Table 3**

| Component | Ex. 1 (wt%) | Ex. 2 (wt%) | Ex. 3 (wt%) | C1 (wt%) |
|---|---|---|---|---|
| SP 1300 | 47.0 | 47.0 | 47.0 | 55 |
| CZ6540 | 4.7 | 4.7 | 4.7 | 5 |
| TOTM | 2.3 | 2.3 | 2.3 | 3 |
| VIERNOL XH8 | 21.1 | 21.1 | 21.1 | 25 |
| PROFINE 2 | 14.1 | ---- | ---- | 0 |
| MASTERBACH PRETO | 3.3 | 3.3 | 3.3 | 4 |
| DRAPEX 6.8 | 2.3 | 2.3 | 2.3 | 3 |
| VELENTIOXY | 2.3 | 2.3 | 2.3 | 3 |
| WINGSTAY L FLAKE | 0.1 | 0.1 | 0.1 | 0.11 |
| IRGANOX 1010 | 0.5 | 0.5 | 0.5 | 0.55 |
| NITRIFLEX NP2021 | 2.3 | 2.3 | 2.3 | 3 |
| MgO | --- | 14.1 | --- | --- |
| Al2O3.2SiO2 | --- | --- | 14.1 | --- |

Examples 1, 2 and 3 were made by combining the materials listed in Table 3 as follows:
1. adding PVC resin, calcium/zinc (Ca/Zn) stabilizer, monomeric plasticizer, polymeric plasticizer, co-stabilizer, calcium carbonate (CaCO₃) or Magnesium oxide or aluminium silicate, and antimony trioxide to a mixing equipment and processing them at a temperature of from 85 to 105°C;
2. adding the following components to the premix obtained in the previous step: nitrile rubber, antioxidants and pigment black and melting the material at a temperature comprised between 175 and 195°C;
3. pouring the mixture in an homogenization equipment operating at a temperature between 170 and 190°C;
4. conveying the mixture to an extrusion equipment operating at a temperature between 170 and 190°C, wherein said extrusion equipment feeds at least one calender;
5. processing the material in the calender until the desired thickness of the substrate is achieved, wherein the preferred thickness is from 0.1 to 0.2 millimeters; Subsequently, a water-based primer (synthetic and natural latex mixture) was applied to the substrate and allowed to dry, then a rubber-based pressure sensitive adhesive was coated over the primer and also dried. In a final step, the high temperature resistant insulating adhesive material was cut into the desired shape for use.

Comparative Example 1was made in a similar manner with the materials listed in Table 3.

The following tests are provided to further illustrate the compositions and effects of the present invention.

### 1- HCl Volatilization Test:

The HCl Volatilization test is a practical and simple test to show the effectiveness of the CaCO3 addition in the prevention of the PVC formulation degradation due to temperature increase. In this test the sample was placed in a glass tube and exposed at 200 °C. A colored pH tape was placed on the top of the tube and the time in which the color changed was related to the initiation of HCl volatilization in the PVC material. The result is reported in minutes of exposure in table 4. A higher time is associated to better thermal stability of the formulation.

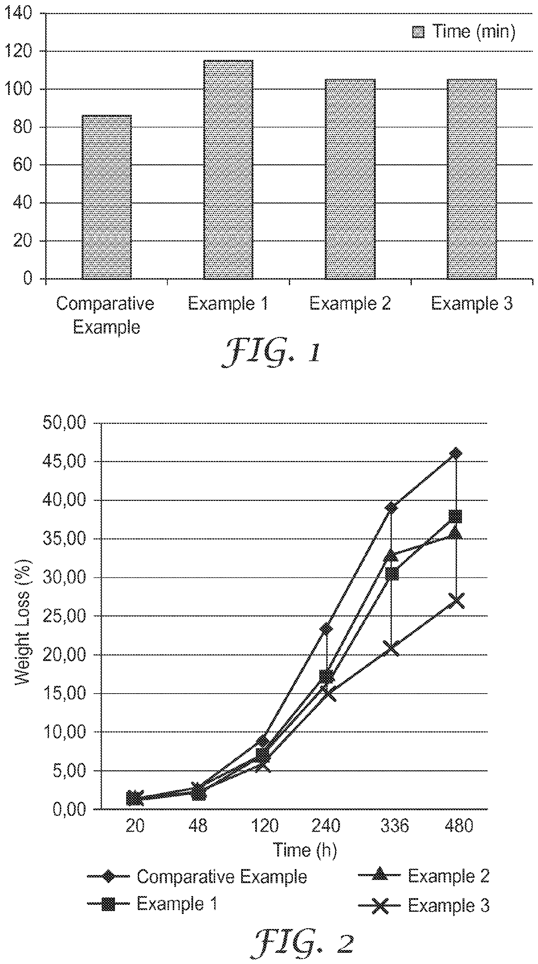

Results of HCl Volatilization test showing the effectiveness of the CaCO3 addition are depicted in FIG. 1.

**Table 4. HCl Volatilization test Results**

| **Example** | **Exposure time before changing color (min)** |
|---|---|
| Example 1 | 115 |
| Example 2 | 105 |
| Example 3 | 105 |
| Comparative Example 1 | 86 |

### 2- Weight Loss Test:

This test measures the Weight Loss (or the mass loss) after exposure the sample at 150°C during 24, 48, 120, 240, 336 and 480 hours. Lower the level of weight Loss better is the thermal resistance of the tape. The tests were carried out on the compositions of Examples 1, 2 and 3 and Comparative Example 1. Results of weight loss test showing the effectiveness of the CaCO3 or MgO or Aluminium silicate addition are depicted in FIG. 2.

Plots shown in FIGs. 1 and 2 illustrate the results of tests carried out on Examples 1, 2 and 3 and Comparative Example 1.

The plot of FIG. 1 discloses the HCl volatilization time, wherein the higher the time, the better the thermal stability of the composition. It should be noted that Example 1 has shown a 38% increase in time of HCl volatilization, example 2, 22% and example 3, 22% which means that there was an increase in PVC degradation time during exposure to a test temperature of 200°C.

The plot of FIG. 2 shows that Examples 1, 2 and 3 had lower mass loss after exposure of the samples to a temperature of 150°C for certain time periods (24, 48, 120, 240, 336 and 480 hours) compared to Comparative Example. Results are showed in Table 5.

**Table 5. Weight Loss Test Results**

| Sample x Time | 24 h | 48 h | 120 h | 240 h | 336 h | 480 h |
|---|---|---|---|---|---|---|
| | Average results (% of Loss) | | | | | |
| Comparative Example | 1,65 | 2,56 | 9,10 | 23,68 | 39,09 | 46,08 |
| Example 1 | 1,40 | 2,35 | 6,87 | 17,19 | 30,90 | 38,13 |
| Example 2 | 1,70 | 2,76 | 6,96 | 17,80 | 32,80 | 36,09 |
| Example 3 | 1,39 | 2,43 | 5,81 | 15,03 | 21,10 | 27,25 |

### 3- Thermal Gravimetric Analysis (TGA):

The TGA was performed with Q 500 from TA Instruments using synthetic air and a heating rate of 20°C/min from 30°C to 1000°C

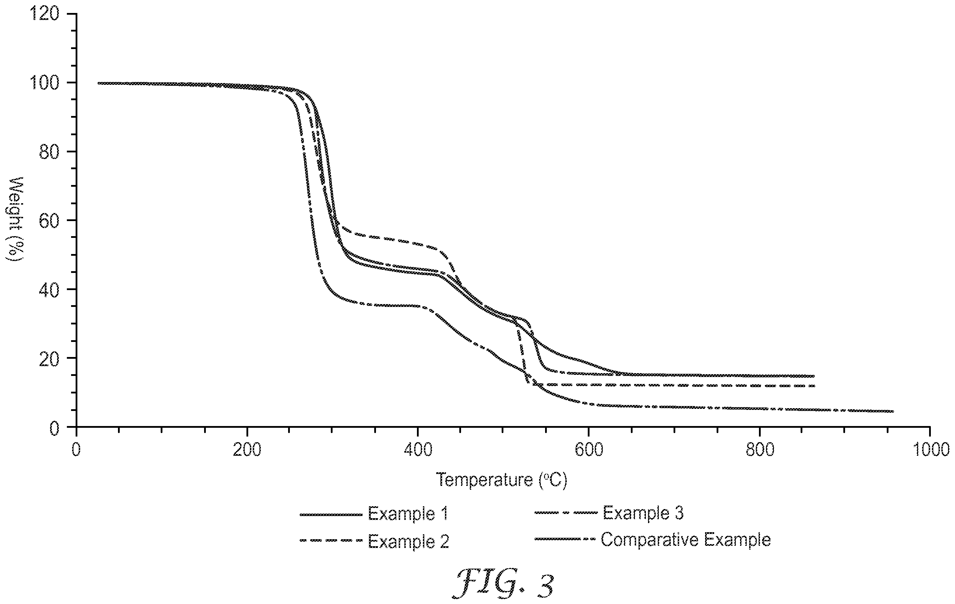

The plot of FIG. 3 shows the measure the formula components degradation by weight loss increasing the temperature until 1000°C in example 1, 2 and 3 and in comparative example.

### 4- SEM (Scanning Electron Microscopy)

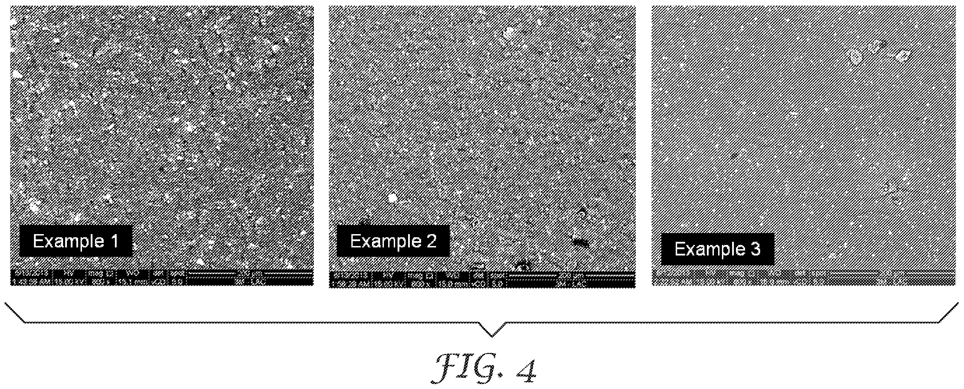

FIG. 4 shows some images of fillers dispersion in PVC matrix by SEM analysis in example 1, 2 and 3.

The images show that the fillers are well dispersed in polymer matrix, presenting just some differences between each other due to the type and size particle of filler used.

The PVC matrix of some embodiments of the present invention uses 0.2 - 5% of the plasticizer trioctyl trimelitate in combination with inorganic materials such as 10-60% of CaCO3 or MgO or Aluminium silicated to improve performance of the material at high temperatures, without compromising its mechanical and dielectric properties (105°C).

The PVC resin is the base polymer of the composition and should be preferably used in an amount of 30 to 60% based on the total weight, the amount of calcium/zinc stabilizer to PVC being used to protect the product against thermal degradation during processing, and the preferred amount of this component ranging between 5 and 15% of the total.

In addition, antioxidative resins are used at about 0.6% of the composition to prevent the constituent materials from oxidizing, especially the PVC resin and the nitrile rubber.

It should be noted that the subject matter of the present invention can be used in various applications, primarily in electric wires and cables. It is also worth mentioning that known similar products have thermal resistance of 90°C, according to the Brazilian Technical Guidelines (Norma Técnica Brasileira) ABNT NBR NM 60454-3-1/2007, and the standards of such technical guidelines were employed herein resulting in a final thermal resistance of 105°C.

Therefore, it can be concluded that embodiments of the present invention solve the problems of the current state of the art by providing an entirely novel composition that results in a product having unique characteristics not observed so far in known similar products.

## Claims

1. A high temperature resistant insulating adhesive tape substrate composition comprising: 40% to 50% by weight polyvinyl chloride; 5% to 15% by weight calcium/zinc stabilizer; and 13% to 23% by weight calcium carbonate.

2. The substrate composition of claim 1, further comprising a monomeric plasticizer.

3. The substrate composition of claim 2, wherein the monomeric plasticizer comprises trioctyl trimelitate or diisononyl phthalate.

4. The substrate composition according to claim 1, further comprising one or more of antioxidants, pigments, monomeric plasticizers, polymeric plasticizers, flame retardants, and co-stabilizer.

5. The substrate composition according to claim 1, having a thermal resistance of 105°C for at least 20,000 hours of exposure, determined according to the Brazilian Technical Guidelines (Norma Técnica Brasiliera) ABNT NBR NM 60454-3-1/2007.

6. An insulating tape comprising the substrate composition of claim 1 coated with a pressure sensitive adhesive.

## Patentansprüche

1. Hochtemperaturbeständige, isolierende Klebebandsubstratzusammensetzung, umfassend: zu 40 bis 50 Gew.-% Polyvinylchlorid; zu 5 bis 15 Gew.-% Calcium/Zink-Stabilisator; und zu 13 bis 23 Gew.-% Calciumcarbonat.

2. Substratzusammensetzung nach Anspruch 1, ferner umfassend einen monomeren Weichmacher.

3. Substratzusammensetzung nach Anspruch 2, wobei der monomere Weichmacher Trioctyltrimelat oder Diisononylphthalat umfasst.

4. Substratzusammensetzung nach Anspruch 1, ferner umfassend ein oder mehrere Antioxidantien, Pigmente, monomere Weichmacher, polymere Weichmacher, Flammschutzmittel und Co-Stabilisator.

5. Substratzusammensetzung nach Anspruch 1, mit einem thermischen Widerstand von 105 °C für mindestens 20.000 Stunden Belichtung, bestimmt nach den brasilianischen technischen Richtlinien (Normas Técnicas Brasileiras) ABNT NBR NM 60454-3-1/2007.

6. Isolierband, umfassend die Substratzusammensetzung nach Anspruch 1, die mit einem Haftkleber beschichtet ist.

## Revendications

1. Composition de substrat de ruban adhésif isolant résistant à une température élevée comprenant : de 40 % à 50 % en poids de chlorure de polyvinyle ; de 5 % à 15 % en poids de stabilisateur de calcium/zinc ; et de 13 % à 23 % en poids de carbonate de calcium.

2. Composition de substrat selon la revendication 1, comprenant en outre un plastifiant monomère.

3. Composition de substrat selon la revendication 2, dans laquelle le plastifiant monomère comprend du trimellitate de trioctyle ou du phtalate de diisononyle.

4. Composition de substrat selon la revendication 1, comprenant en outre un ou plusieurs antioxydants, pigments, plastifiants monomères, plastifiants polymères, ignifugeants, et costabilisateurs.

5. Composition de substrat selon la revendication 1, ayant une résistance thermique de 105 °C pendant au moins 20 000 heures d'exposition, déterminée selon les Directives Techniques Brésiliennes (Norma Técnica Brasiliera) ABNT NBR NM 60454-3-1/2007.

6. Ruban isolant comprenant la composition de substrat selon la revendication 1 revêtue d'un adhésif sensible à la pression.
